# EUROPÄISCHE PATENTANMELDUNG

(11) **EP 0 878 447 A1**
(43) Veröffentlichungstag der Anmeldung: **18.11.1998**
(21) Anmeldenummer: 98108553.3
(22) Anmeldetag: 11.05.1998
(51) Int. Cl.: C02F 11/12, C02F 11/04

(54) **Verfahren zur Optimierung und Erhöhung der Raumbelastung von Vergärungsreaktoren**

(30) Priorität: 12.05.1997 DE 19719895
(71) Anmelder: M A T Müll- und Abfalltechnik GmbH, 70191 Stuttgart (DE)
(72) Erfinder: Korz, Dieter Jürgen, Dr.-Ing., 73728 Esslingen (DE); Donderer, Michael, Dipl.-Ing., 73728 Esslingen (DE)
(74) Vertreter: Henkel, Feiler, Hänzel

(57) **Zusammenfassung**

Beschrieben wird ein Verfahren zur Eindickung von Schlämmen mit biogen-organischen Inhaltsstoffen, welches dadurch gekennzeichnet ist, daß die Schlämme vor ihrer Vergärung einer mechanischen Eindickung unterworfen werden, um die Trockensubstanzkonzentration des Schlammes zu erhöhen.

## Beschreibung

Die vorliegende Erfindung betrifft ein Verfahren zur Steigerung der organischen Raumbelastung von Vergärungsreaktoren, die zur anaeroben biologischen Stabilisierung von Schlämmen mit biogen-organischen Inhaltsstoffen eingesetzt werden.

Die anaerobe Behandlung (Vergärung) wird im Entsorgungsbereich sehr häufig zur biologischen Stabilisierung von Schlämmen mit biogen-organischen Inhaltsstoffen eingesetzt. Zu den wichtigsten Einsatzgebieten der Vergärungstechnik gehören die Behandlung von Klärschlämmen als Verfahrensstufe der kommunalen oder industriellen Abwasserreinigung, die Abfallbehandlung sowie die Behandlung von Stoffströmen aus dem landwirtschaftlichen Bereich (Gülle).

Bei der Abfallvergärung kommen als Einsatzstoffe v.a. Haus- und Gewerbemüll, Bioabfall aus der getrennten kommunalen Hausmüllsammlung sowie organische Gewerbeabfälle wie Abfälle aus der Nahrungs- und Genußmittelproduktion oder Speiseabfälle aus Großküchen und Kantinen in Frage. Um eine Verarbeitung dieser Abfälle in der Vergärung zu ermöglichen, wird bei zahlreichen Behandlungsverfahren eine Aufbereitung mit dem Ziel der Zerkleinerung, Homogenisierung und Abtrennung biologisch nicht abbaubarer Abfallbestandteile, z.B. Kunststoffe, Glas, Metalle, der Vergärung vorgeschaltet. Hierzu wird der Abfall in einem Misch- oder Auflösebehälter (Abfallpulper) mit Prozeß- oder Brauchwasser versetzt, um einen Schlamm herzustellen, aus dem Störstoffe durch Schwimm-/Sinktrennung entfernt werden können. Die bei der Mischung des Abfallschlammes einwirkenden Scherkräfte bewirken außerdem eine schonende, selektive Zerfaserung und Zerkleinerung vergärbarer organischer Abfallbestandteile. Durch diese Naßaufbereitungstechnik wird der Wassergehalt der Abfälle erhöht und auf etwa 92-95% eingestellt.

Ähnlich hohe Wassergehalte weisen sowohl die bei der Abwasserreinigung anfallenden Klärschlämme als auch die bei der Schweine- und Rinderzucht anfallenden Güllen auf.

Es ist üblich, auch Mischungen der beschriebenen Schlämme in sogenannten Co-Vergärungsanlagen zu behandeln. Es können so die mikrobiologischen Abbauprozesse hinsichtlich der Nährstoffversorgung optimiert und Probleme bei der Monochargenbehandlung verhindert werden. Hier besteht beispielsweise die Möglichkeit, Schlämme aus der Abfallaufbereitung gemeinsam mit Klärschlamm in den Faultürmen kommunaler Kläranlagen zu verarbeiten. Sehr häufig praktiziert wird auch die gemeinsame anaerobe Behandlung von Gülle mit organischen Gewerbeabfällen (Speise-, Fettabscheider-, Schlachthofabfälle etc.) und/oder kommunalen Bioabfällen. In beiden Anwendungsfällen ist bei der Mitverarbeitung von Abfällen eine entsprechende Aufbereitungstechnik erforderlich. Der Vorteil beim Betrieb von Co-Vergärungsanlagen liegt in der gemeinsamen Nutzung vorhandener Infrastruktur und der Verbesserung der Abbaueigenschaften der Schlämme.

Die beschriebenen Schlämme bzw. Güllen werden üblicherweise ohne weitere Vorbehandlung einem Vergärungsreaktor zugeführt. Das für die Vergärung erforderliche Reaktorvolumen wird durch die organische Raumbelastung und die hydraulische Verweilzeit bestimmt. Um einen ausreichend hohen Abbaugrad zu erreichen, ist eine Mindestverweilzeit im Vergärungsreaktor erforderlich, die üblicherweise zwischen 10 und 21 Tagen liegt. Eine Reduzierung der Mindestverweilzeit unter 10 Tage würde eine höhere Raumbelastung und somit eine ungenügende biologische Stabilisierung und höhere organische Restbelastung des ausgefaulten Schlammes mit sich bringen, so daß die nachgeschalteten Verfahrensstufen wie Kompostierung oder Abwasserreinigung für den Abbau einer höheren Organikfracht ausgelegt werden müßten. Eine Reduktion der Mindestverweilzeit im Vergärungsreaktor ist somit mit Schwierigkeiten behaftet, so daß bisher große Reaktorvolumina bei Einhaltung der o.g. Mindestverweilzeiten notwendig sind.

Da jedoch die Wirtschaftlichkeit eines Vergärungsverfahrens entscheidend von dem erforderlichen Reaktorvolumen bestimmt wird, wäre eine Verkleinerung im Hinblick auf die Minimierung der Investitionskosten günstig. Auch der elektrische Energiebedarf der Anlage, z.B. für die Durchmischung oder Umwälzung des Reaktors, könnte bei einer Verkleinerung beträchtlich reduziert werden.

Aufgabe der vorliegenden Erfindung ist es somit, eine Erhöhung der organischen Raumbelastung im Vergärungsreaktor bei gleicher hydraulischer Verweilzeit zu erzielen.

Diese Aufgabe läßt sich erfindungsgemäß dadurch lösen, daß der Wassergehalt der zu vergärenden Schlämme vor dem Eintritt in den Vergärungsreaktor reduziert wird, um damit das pro Zeiteinheit zu behandelnde Schlammvolumen zu verkleinern. Durch die Erhöhung der Trockensubstanzkonzentration wird bei gleicher hydraulischer Verweilzeit die organische Raumbelastung des Vergärungsreaktors erhöht. Diese Erhöhung der organischen Raumbelastung kann bis zu einem vom Vergärungssystem abhängigen Maximalwert gesteigert werden, ohne daß sich dadurch negative Auswirkungen auf den Stabilisierungsprozeß, d.h. den erreichbaren Abbaugrad ergeben.

Gegenstand der vorliegenden Erfindung ist somit ein Verfahren zur Eindickung von Schlämmen mit biogen-organischen Inhaltsstoffen, dadurch gekennzeichnet, daß die Schlämme vor ihrer Vergärung einer mechanischen Eindickung unterworfen werden, um die Trockensubstanzkonzentration des Schlamms zu erhöhen. Die Trockensubstanzkonzentration beträgt gewöhnlich 1-9%, zweckmäßigerweise 3-8%, vorzugsweise 5-8%. Durch die Eindickung wird dem Schlamm Wasser entzogen und seine Trockensubstanz auf einen gewünschten Wert eingestellt, der eine optimale organische Raumbelastung im Vergärungsreaktor ermöglicht. Erfindungsgemäß wird die Trockensubstanzkonzentration gewöhlich auf einen Wert von 10-15%, zweckmäßigerweise 10-13%, vorzugsweise 11-13% eingestellt. Für die Schlammeindickung können verschiedene Verfahren wie z.B. Siebentwässerungsaggregate, Pressen (z.B. Schneckenpressen), Dekanter oder Zentrifugen eingesetzt werden.

Die im erfindungsgemäßen Verfahren verwendeten Schlämme können aus der Abwasser-(Klärschlamm) oder Abfallbehandlung sowie aus der landwirtschaftlichen Produktion (Gülle) stammen.

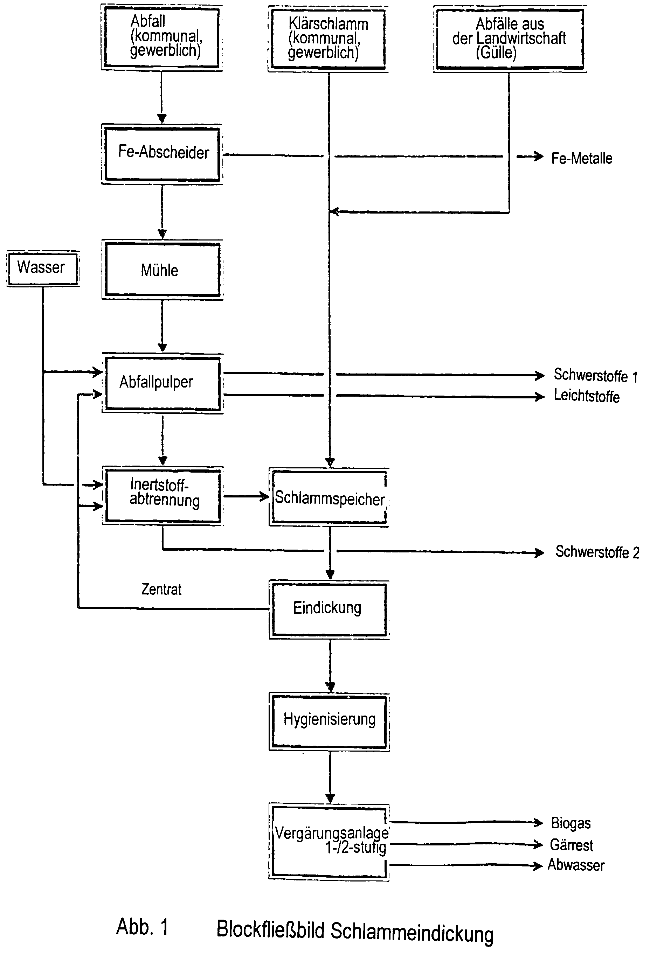

Beispielhaft sei nachfolgend die Verfahrenskonzeption der Eindickung eines Schlammes am Beispiel eines aus Abfällen, vorzugsweise Bioabfällen, erzeugten Schlammes dargestellt. Die Naßaufbereitung der Abfälle, vorzugsweise der Bioabfälle, kann hierbei nach der im BTA-Verfahren realisierten Konzeption erfolgen. Figur 1 zeigt in Form eines Blockfließbilds den möglichen Verfahrensablauf.

Der beispielsweise aus kommunalen oder gewerblichen Quellen stammende Abfall wird nach fakultativer Durchführung einer Abtrennung metallischer Bestandteile z.B. von Eisenmetallen mittels eines Metallabscheiders in einem Sackaufreißer, beispielsweise einer Mühle, zunächst aufgelockert und schonend zerkleinert, wobei Plastik- und Papiersäcke aufgerissen werden. Der vorzerkleinerte Rohmüll gelangt dann in einen Auflösebehälter, beispielsweise in einen Abfallpulper, in dem er mit Wasser versetzt und Scherkräften ausgesetzt wird, um eine Rohsuspension herzustellen. Es wird hier bevorzugt, die Rohsuspension auf eine Trockensubstanzkonzentration von 5-9%, insbesondere 7-9%, einzustellen. Die im Bioabfall enthaltenen Störstoffe können durch Schwimm-/Sinktrennung entfernt werden. Um eine möglichst effiziente und organikfreie Störstoffabtrennung sicherzustellen sowie im Hinblick auf einen minimalen elektrischen Energieeintrag ist die Einstellung höherer Trockensubstanzkonzentrationen nicht erwünscht. Der organikhaltige Schlamm, der gewöhnlich eine Partikelgröße von bis zu 25 mm aufweist, wird am Boden des Behälters in einen Vorlagebehälter abgepumpt. Im Schlamm noch enthaltene inerte Bestandteile wie Sand, Glassplitter, Steine können im Rahmen einer Inertstoffabtrennung beispielsweise mittels Hydrozyklon unter Mitverwendung von Spülwasser entfernt werden. Das für diesen Prozeß erforderliche Spülwasser führt zu einer weiteren Verringerung der Trockensubstanzkonzentration des Schlammes auf üblicherweise 3-8%, vorzugsweise 5-8%. Der erhaltene Schlamm wird dann den weiteren Verfahrensstufen zugeführt.

Wahlweise kann der erhaltene Schlamm nun einer physikalisch-chemischen Behandlung unter alkalischen Bedingungen und bei erhöhter Temperatur unterworfen werden. Dies dient dazu, bei bestimmten Müllsorten die Vergärbarkeit zu erhöhen.

Anschließend kann der erhaltene Schlamm einer Fest-Flüssig-Trennung, in der eine Auftrennung (zweistufiges Verfahren) in einen Flüssigkeitsstrom und einen Feststoffstrom erfolgt, unterzogen werden oder direkt (einstufiges Verfahren) einem Schlammspeicher bzw. Vorlagebehälter zur nachfolgenden Vergärung zugeführt werden. Beim zweistufigen Verfahren wird der Flüssigkeitsstrom in einen Schlammspeicher bzw. einen Vorlagebehälter zur anschließenden Vergärung überführt. Der Feststoffstrom wird gegebenenfalls nach einer Hydrolyse und anschließenden abermaligen Abtrennung des bei der Hydrolyse entstandenen flüssigen Teils einer aeroben Nachrotte zugeführt.

Üblicherweise stellt sich im Vergärungsreaktor aufgrund des mikrobiologischen Abbaues der organischen Trockensubstanz eine Gleichgewichtskonzentration von 2-5% ein. Erfahrungen mit Reaktoren zeigen, daß für die Vergärung Trockensubstanzkonzentrationen von mindestens 8% jedoch kein Problem darstellen. Aus diesem Grunde wird erfindungsgemäß der Schlamm vor dem Eintrag in den Reaktor mechanisch eingedickt, um die Trockensubstanzkonzentration des Schlamms zu erhöhen. Die Trockensubstanzkonzentration des aus den vorgeschalteten Verfahrensstufen erhaltenen Schlamms beträgt gewöhnlich 1-8%, zweckmäßigerweise 3-7%, vorzugsweise 5-7%. Durch die Eindickung wird dem Schlamm Wasser entzogen und seine Trockensubstanz auf einen gewünschten Wert eingestellt, der eine optimale organische Raumbelastung im Vergärungsreaktor ermöglicht. Erfindungsgemäß wird die Trockensubstanzkonzentration gewöhlich auf einen Wert von 10-15%, zweckmäßigerweise 10-13%, vorzugsweise 11-13% eingestellt. Für die Schlammeindickung können verschiedene Verfahren wie z.B. Siebentwässerungsaggregate, Pressen (z.B. Schneckenpressen), Dekanter oder Zentrifugen eingesetzt werden. Gegebenenfalls kann dem Vergärungsreaktor ferner eine Hygienisierungseinrichtung vorgeschaltet sein, um die seuchenhygenische Unbedenklichkeit des Endprodukts des Vergärungsprozesses (Garrest) sicherzustellen. Durch die Hygienisierung werden Bakterien, Pilze, Viren und Unkrautsamen inaktiviert. Dies kann beispielsweise durch Behandeln in einer Hygienisierungsvorrichtung (z.B. Erhitzungstemperatur 70°C; Verweilzeit 30 min) erfolgen. Die Hygienisierung kann vor oder nach der Eindickung, vorzugsweise nach der Eindickung, durchgeführt werden. Vorteil einer Hygienisierung nach der Eindickung ist, daß hierbei wegen des kleineren Massestroms kleiner Aggregate und weniger Energie benötigt werden.

Beispielhaft wird im folgenden die Eindickung mit einer Siebentwässerungsmaschine beschrieben.

Der Schlamm wird dabei vom Vorlagebehälter bzw. Schlammspeicher beispielsweise zur Siebentwässerungsmaschine gepumpt. Der erreichbare Eindickungsgrad läßt sich beispielsweise aus der Menge an zudosiertem Flockungshilfsmittel (FHM) bestimmen. Neben der Menge an Flockungshilfsmittel kann der Eindickungsgrad beispielsweise auch durch die Siebgeschwindigkeit beeinflußt werden. Hierbei ist jedoch darauf zu achten, daß nicht eine maximale TS des Schlammes, sondern eine für die optimale organische Raumbelastung des Reaktors erforderliche TS eingestellt wird. Diese liegt beispielsweise für das hier vorgestellte Konzept vorzugsweise bei ca. 6-7 kg oTR/( m³* d). Um diesen Wert im Reaktor einstellen zu können, ist eine Eindickung des Schlammes auf zweckmäßigerweise 10-13% TS erforderlich.

Der beispielsweise mit FHM versetzte Schlamm läuft auf einer waagerechten Entwässerungsstrecke durch ein kontinuierlich umlaufendes Sieb ab. Auf dem Sieb können sich Schikanen zur Verbesserung des Eindickeffektes und zur Verhinderung einer Feuchtigkeitsschicht auf der Oberfläche befinden. Feststoffe werden auf dem Sieb zurückgehalten und über eine Staurampe dem Vergärungsreaktor zugeführt. Das gewonnene Zentrat wird in einem Zwischenspeicher gesammelt. Analog zur Eindickung mit einer Siebentwässerungsmaschine kann die Eindickung auch mit einer Schneckenpresse, einem Dekanter oder einer Zentrifuge in ähnlicher Weise durchgeführt werden.

Entscheidend ist, daß der Schlamm im Rahmen des erfindungsgemäßen Verfahrens vor der Vergärung eingedickt wird, um die Trockensubstanzkonzentration des Schlamms zu erhöhen. Das dabei als Nebenprodukt erhaltene Wasser, im folgenden Zentrat genannt, kann in einer bevorzugten Ausführungsform zum Anmaischen der Bioabfälle im Abfallpulper genutzt werden, so daß eine Wasserkreislaufführung erfolgt. Das Zentrat kann außerdem in einer weiteren bevorzugten Ausführungsform als Spülwasser für die Entwässerungsvorrichtung, beispielsweise das Siebband der Siebentwässerungsvorrichtung, verwendet werden. Weiterhin kann das Zentrat in einer weiteren bevorzugten Ausführungsform bei Bedarf aufgrund des hohen, leicht abbaubaren chemischen Sauerstoffbedarfs (CSB) als Kohlenstoffguelle einer der Vergärung nachgeschalteten Denitrifikationsanlage zudosiert werden. Durch diese Maßnahme kann auf eine Dosierung von externen Kohlenstoffquellen verzichtet werden. Die als bevorzugte Ausführungsformen dargestellten Verwendungen des Zentrats im Rahmen des Gesamtverfahrens lassen sich auch in beliebiger Weise kombinieren.

Anschließend wird der eine erhöhte Trockensubstanzkonzentration aufweisende Schlamm einer anaeroben Vergärung zugeführt. Versuche haben gezeigt, daß bei eine erhöhte Trockensubstanzkonzentration von beispielsweise 10-14% aufweisenden Schlämmen eine deutlich höhere organische Raumbelastung im Vergärungsreaktor erreicht wird.

Bei einem erfindungsgemäß durchgeführtem Versuch hatte die Bioabfallsuspension einen Trockenrückstand von 8,7%. Der Glühverlust lag bei 75%. Die eingedickte Suspension hatte einen Trockenrückstand von 13,7% und einen Glühverlust von 77%. Die Eindickung ermöglicht somit eine Steigerung der organischen Raumbelastung um 60 - 65% bei gleicher hydraulischer Verweilzeit von 14 Tagen im Vergärungsreaktor. Der FHM-Verbrauch lag bei 0,8 - 1 g/kg TS.

Das bei der Vergärung entstehende Biogas kann nach Entnahme aus dem Vergärungsreaktor einer weiteren Verwertung zugeführt werden. Ferner kann der als weiteres Produkt erhaltene Ablauf in ähnlicher Weise wie das beim Eindicken gewonnene Zentrat auch im Verfahren zu denselben Zwecken wiedereingesetzt werden.

## Patentansprüche

1. Verfahren zur Eindickung von Schlämmen mit biogen-organischen Inhaltsstoffen, dadurch gekennzeichnet, daß die Schlämme vor ihrer Vergärung einer mechanischen Eindickung unterworfen werden, um die Trockensubstanzkonzentration des Schlammes zu erhöhen.

2. Verfahren nach Anspruch 1, dadurch gekennzeichnet, daß die Schlämme aus der Abwasser-(Klärschlamm) oder Abfallbehandlung sowie aus der landwirtschaftlichen Produktion (Gülle) stammen.

3. Verfahren nach Anspruch 2, dadurch gekennzeichnet, daß vermischte Schlämme unterschiedlicher Herkunft eingedickt und der Vergärung zugeführt werden.

4. Verfahren nach einem der Ansprüche 1 bis 3, dadurch gekennzeichnet, daß die mechanische Eindickung der Schlämme durch Siebentwässerung, Zentrifugieren, Dekantieren, Extrudieren oder Filtration erfolgt.

5. Verfahren nach einem der vorhergehenden Ansprüche, dadurch gekennzeichnet, daß die Schlämme aus durch eine Naßaufbereitung hergestellten Abfällen stammen.

6. Verfahren nach einem der vorhergehenden Ansprüche, dadurch gekennzeichnet, daß bei der Eindickung anfallendes Zentrat als Prozeß- und Spülwasser zur Herstellung von Abfallschlämmen in der Naßaufbereitung eingesetzt werden.

7. Verfahren nach einem der vorhergehenden Ansprüche, dadurch gekennzeichnet, daß bei der Eindickung anfallendes Zentrat als Kohlenstoffquellenträger in einer biologischen Abwasserbehandlungsanlage eingesetzt wird.

8. Verfahren nach einem der vorhergehenden Ansprüche, dadurch gekennzeichnet, daß die eingedickten Schlämme in einer ein- oder mehrstufigen Vergärungsanlage behandelt werden.

9. Verfahren nach einem der vorhergehenden Ansprüche, dadurch gekennzeichnet, daß die eingedickten Schlämme einer Hydrolysestufe zugeführt werden.

10. Verfahren nach einem der vorhergehenden Ansprüche, dadurch gekennzeichnet, daß die eingedickten Schlämme vor der Vergärung oder Hydrolyse einen thermischen Behandlungsschritt durchlaufen.
